# EUROPEAN PATENT APPLICATION

(11) **EP 4 768 291 A1**
(43) Date of publication of application: **01.07.2026**
(21) Application number: 25223215.2
(22) Date of filing: 15.12.2025
(51) Int. Cl.: B60J 1/20, G06F 1/16

(54) **SLIDING SCREEN ASSEMBLY, AUTOMOTIVE SEAT, AUTOMOTIVE SUNROOF, AND AUTOMOBILE**

(30) Priority: 27.12.2024 CN 202423272942 U
(71) Applicant: AUMOVIO Germany GmbH, 60488 Frankfurt am Main (DE)
(72) Inventor: Xu, Mingyuan, Wuhu, Anhui Province, 241009 (CN); Zhang, Gaolei, Wuhu, Anhui, 241009 (CN); Ji, Yuanfeng, Wuhu, Anhui, 241009 (CN)
(74) Representative: Aumovio Corporation

(57) **Abstract**

The present application discloses a sliding screen assembly, including a winding unit (1); a flexible screen (2) wound on the winding unit, where the flexible screen is provided with a free end (21); a support plate (3) hinged to the free end, where the support plate is used to support the flexible screen unwound by the winding unit; a fixed base (4); and a linkage (5) having an end hinged to the fixed base and the other end hinged to the support plate, where the linkage is rotatable in a forward direction and a reverse direction around a hinge point between the linkage and the fixed base (6a), to drive the support plate to rotate in the forward direction and the reverse direction, thereby driving the winding unit to unwind and wind the flexible screen, enabling the flexible screen to unfold and fold. The present application further discloses an automotive seat, an automotive sunroof, and an automobile.

## Description

### Technical Field

The application relates to the technical field of automobiles, and in particular, to a sliding screen assembly, an automotive seat, an automotive sunroof, and an automobile.

### Background

In the industry of consumer electronics, there are assemblies or apparatuses for unfolding or folding a flexible screen. However, these assemblies or apparatuses are generally arranged in the space above the flexible screen, so that the flexible screen is actuated or driven by these assemblies or apparatuses to unfold from top to bottom and fold from bottom to top, for example, an unfolding and folding mechanism for a projection screen.

As there is no space in the upper part of automotive interior trims such as the dashboard, there is no effective arrangement for a flexible screen yet. In order to achieve unfolding within the complex and limited space of the dashboard, the existing flexible screen typically needs to be transferred from the back side of the dashboard to the upper side of the dashboard, and then slide down from the upper side for unfolding, resulting in a complex movement trajectory of the flexible screen. A movement track for the flexible screen is often exposed, making the appearance untidy. Moreover, the existing flexible screen is generally made of flexible materials such as plastic or thin glass. Since the physical strength of these materials may not be comparable to that of conventional hard glass, the strength of the flexible screen is not high.

### Summary

The present application provides a sliding screen assembly to solve the aforementioned problems.

In a first aspect, an implementation of the present application discloses a sliding screen assembly, including: a winding unit; a flexible screen wound on the winding unit, where the flexible screen is provided with a free end; a support plate hinged to the free end, where the support plate is used to support the flexible screen unwound by the winding unit; a fixed base; and a linkage having an end hinged to the fixed base and the other end hinged to the support plate, where the linkage is rotatable, in a forward direction and a reverse direction, around a hinge point between the linkage and the fixed base, to drive the support plate to rotate in the forward direction and the reverse direction, thereby driving the winding unit to unwind and wind the flexible screen, enabling the flexible screen to unfold and fold.

With the aforementioned technical solution, the flexible screen is hinged to the support plate, so that while the linkage drives the support plate to move in the forward direction and the reverse direction, the flexible screen also moves relative to the support plate. When the flexible screen is unfolded, the flexible screen is attached to the support plate, and the support plate provides a support force for the flexible screen, enhancing the strength of the flexible screen, and preventing collapse of the flexible screen that affects the display effect of the screen. In the present application, as the flexible screen is hinged to the support plate, the support plate and the winding unit cooperate with each other to tension the flexible screen, preventing the collapse of the flexible screen. The present application enables unfolding and folding of the flexible screen through movement of the linkage, resulting in a simple structure. There is also no need to arrange a movement track for the unfolding and folding of the flexible screen in the sliding screen assembly, resulting in a neat and aesthetic appearance. When the flexible screen is folded, the sliding screen assembly is not exposed, making the appearance neat and aesthetic.

Optionally, a hinge axis at which the end of the linkage is hinged to the fixed base is a first hinge axis; a hinge axis at which the other end of the linkage is hinged to the support plate is a second hinge axis; a hinge axis at which the support plate is hinged to the flexible screen is a third hinge axis; and the first hinge axis, the second hinge axis, and the third hinge axis are arranged in parallel.

Optionally, the linkage includes: a first linkage, where a hinge point at which an end of the first linkage is hinged to the fixed base is a first hinge point, and a hinge point at which the other end of the first linkage is hinged to the support plate is a second hinge point; and a second linkage, where a hinge point at which an end of the second linkage is hinged to the fixed base is a third hinge point, and a hinge point at which the other end of the second linkage is hinged to the support plate is a fourth hinge point; in a height direction, the first hinge point is lower than the third hinge point, and the second hinge point is lower than the fourth hinge point, so that the first linkage and the second linkage drive the support plate to rotate in the forward direction and the reverse direction, thereby driving the flexible screen to, during unfolding, first move along an arc line trajectory and then move along an approximately straight line trajectory, and driving the flexible screen to, during folding, first move along the approximately straight line trajectory and then move along the arc line trajectory.

Optionally, a distance between the first hinge point and the second hinge point of the first linkage is greater than a distance between the third hinge point and the fourth hinge point of the second linkage; and the first hinge point is located at the rear of the third hinge point.

Optionally, the first linkage and the second linkage are arc-shaped and protrude in a direction away from the fixed base.

Optionally, two first linkages are provided, and the two first linkages are arranged in a first direction; two second linkages are provided, and the two second linkages are arranged in a second direction; and the first direction is parallel to the second direction.

Optionally, the support plate includes a guide member; and the sliding screen assembly includes a limiting guide rail, where an extension path of the limiting guide rail is consistent with a movement trajectory of the guide member when the support plate moves, and the limiting guide rail is used to prevent the support plate from shaking during movement.

In a second aspect, an implementation of the present application discloses an automotive seat, including the sliding screen assembly according to any embodiment of the first aspect described above.

In a third aspect, an implementation of the present application discloses an automotive sunroof, including the sliding screen assembly according to any embodiment of the first aspect described above.

In a fourth aspect, an implementation of the present application discloses an automobile, including a hiding portion for hiding the sliding screen assembly according to any embodiment of the first aspect described above, where the hiding portion includes: an opening; an accommodating cavity, where the sliding screen assembly is accommodated in the accommodating cavity, the sliding screen assembly extends from the accommodating cavity through the opening when the flexible screen is unfolded, and the sliding screen assembly is retracted into the accommodating cavity through the opening when the flexible screen is folded; and a cover plate capable of covering and uncovering the opening.

### Brief Description of the Drawings

FIG. 1 illustrates a first perspective view of a sliding screen assembly according to an embodiment of the present application;
FIG. 2 illustrates a first side view of a sliding screen assembly according to an embodiment of the present application;
FIG. 3 illustrates a second perspective view of a sliding screen assembly according to an embodiment of the present application;
FIG. 4 illustrates a second side view of a sliding screen assembly according to an embodiment of the present application;
FIG. 5 illustrates a third perspective view of a sliding screen assembly according to an embodiment of the present application;
FIG. 6 illustrates a third side view of a sliding screen assembly according to an embodiment of the present application; and
FIG. 7 illustrates a fourth perspective view of a sliding screen assembly according to an embodiment of the present application.

### Detailed Description

Implementations of the present application are described below with specific embodiments. Those skilled in the art could easily understand other advantages and effects of the present application from the content disclosed in this specification. Although the description of the present application will be introduced in conjunction with preferred embodiments, this does not mean that the features of the present application are limited to the implementations. Rather, introducing the present application in conjunction with the implementations is for the purpose of encompassing other options or modifications that may be derived based on the claims of the present application. In order to provide a deep understanding of the present application, many specific details will be included in the following description. It is also possible that the present application is implemented without these details. Moreover, in order to avoid confusing or obscuring key points of the present application, some specific details will be omitted from the description. It is to be noted that, in the absence of conflict, the embodiments of the present application and the features in the embodiments can be combined with each other.

It should be noted that, in this specification, similar reference numerals and letters denote similar items in the following drawings. Therefore, once an item is defined in one drawing, it does not need to be further defined or explained in subsequent drawings.

The terms "first", "second", and the like are only used for distinguishing descriptions and should not be construed as indicating or implying relative importance.

In the description of the embodiments, it is also to be noted that, unless otherwise clearly specified and limited, the terms "provide", "connected", and "connect" should be understood in a broad sense. For example, it may be a fixed connection, a detachable connection, or an integral connection; it may be a mechanical connection or an electrical connection; it may be a direct connection or an indirect connection via an intermediate medium, or it may be internal communication between two elements. For those of ordinary skill in the art, the specific meanings of the aforementioned terms in the embodiments may be understood according to specific situations.

In order to make the objectives, technical solutions, and advantages of the present application clearer, the implementations of the present application will be described in further detail below with reference to the drawings.

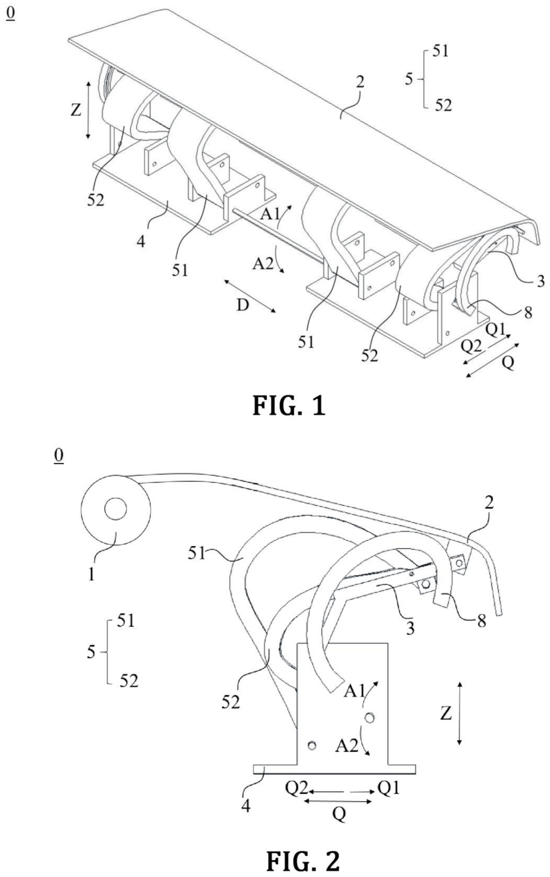

FIG. 1 illustrates a perspective view of some components (a flexible screen 2, a support plate 3, a fixed base 4, a linkage 5, and a limiting guide rail 8) in a sliding screen assembly 0 provided by the present application when the flexible screen 2 is folded. FIG. 2 illustrates a side view of the sliding screen assembly 0 provided by the present application when the flexible screen 2 is folded.

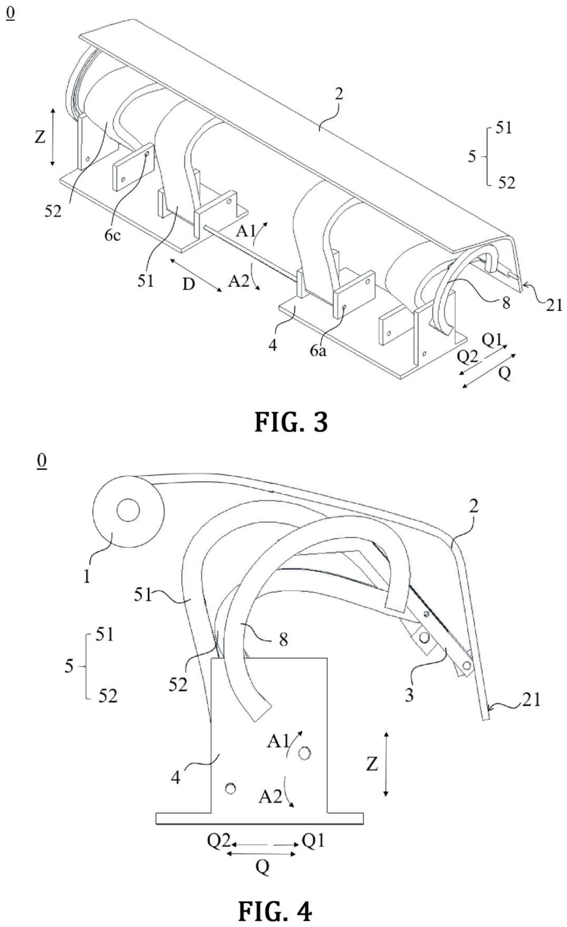

FIG. 3 illustrates a perspective view of some components (the flexible screen 2, the support plate 3, the fixed base 4, the linkage 5, and the limiting guide rail 8) in the sliding screen assembly 0 provided by the present application when the flexible screen is in an intermediate state of folding and unfolding processes. FIG. 4 illustrates a side view of the sliding screen assembly 0 provided by the present application when the flexible screen is in the intermediate state of folding and unfolding processes.

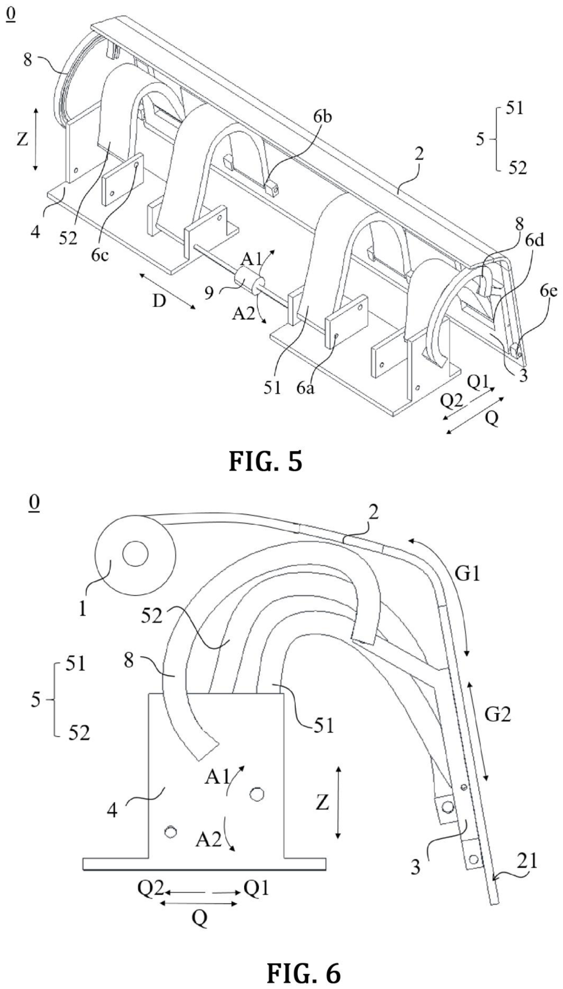

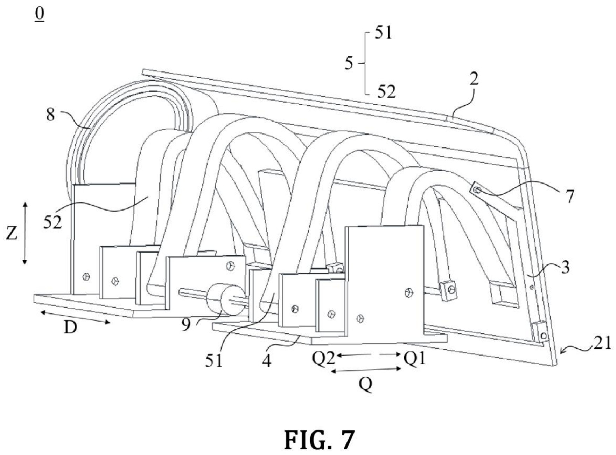

FIG. 5 illustrates a first perspective view of some components (the flexible screen 2, the support plate 3, the fixed base 4, the linkage 5, the limiting guide rail 8, and a driving unit 9) in the sliding screen assembly 0 provided by the present application when the flexible screen 2 is unfolded. FIG. 6 illustrates a side view of the sliding screen assembly 0 provided by the present application when the flexible screen 2 is unfolded. FIG. 7 illustrates a second perspective view of some components (the flexible screen 2, the support plate 3, the fixed base 4, the linkage 5, a guide rail 7, the limiting guide rail 8, and the driving unit 9) in the sliding screen assembly 0 provided by the present application when the flexible screen 2 is unfolded.

In a first aspect, referring to FIG. 1 to FIG. 6, the present application provides a sliding screen assembly 0, including: a winding unit 1, a flexible screen 2, a support plate 3, a fixed base 4, and a linkage 5.

The flexible screen 2 is wound on the winding unit 1. The flexible screen 2 is provided with a free end 21. The support plate 3 is hinged to the free end 21, where the support plate 3 is used to support the flexible screen 2 unwound by the winding unit 1. The linkage 5 has an end hinged to the fixed base 4 and the other end hinged to the support plate 3. The linkage 5 is rotatable, in a forward direction A1 and a reverse direction A2, around a hinge point between the linkage 5 and the fixed base 4, to drive the support plate 3 to rotate in the forward direction and the reverse direction, thereby driving the winding unit 1 to unwind and wind the flexible screen 2, enabling the flexible screen 2 to unfold and fold.

In this embodiment, an end of the flexible screen 2 is wound on the winding unit 1, and the other end thereof is the free end 21, where the free end 21 is hinged to the support plate 3. During unfolding and folding of the flexible screen 2, the winding unit 1 provides a tensioning force for the flexible screen 2 to ensure that the flexible screen 2 is tensioned.

In some possible embodiments, the winding unit 1 is a roller, where the roller is connected to a driving motor, and the driving motor drives the roller to roll, thereby winding and unwinding the flexible screen 2.

In some other possible embodiments, the winding unit 1 is a coil spring, where the coil spring has an automatic reset function and can automatically wind the flexible screen 2.

With the aforementioned technical solution, the flexible screen 2 is hinged to the support plate 3, so that while the linkage 5 drives the support plate 3 to move in the forward direction and the reverse direction, the flexible screen 2 also moves relative to the support plate 3. When the flexible screen 2 is unfolded, the flexible screen 2 is attached to the support plate 3, and the support plate 3 provides a support force for the flexible screen 2, enhancing the strength of the flexible screen 2, and preventing collapse of the flexible screen 2 that affects the display effect of the screen. In the present application, as the flexible screen 2 is hinged to the support plate 3, the support plate 3 and the winding unit 1 cooperate with each other to tension the flexible screen 2, preventing the collapse of the flexible screen 2.

The present application enables unfolding and folding of the flexible screen 2 through movement of the linkage 5, resulting in a simple structure. There is also no need to arrange a movement track for the unfolding and folding of the flexible screen 2 in the sliding screen assembly 0, resulting in a neat and aesthetic appearance. When the flexible screen 2 is folded, the sliding screen assembly 0 is not exposed, making the appearance neat and aesthetic.

In some possible embodiments provided by the present application, referring to FIG. 1 to FIG. 7, a hinge axis at which the end of the linkage 5 is hinged to the fixed base 4 is a first hinge axis; a hinge axis at which the other end of the linkage 5 is hinged to the support plate 3 is a second hinge axis; a hinge axis at which the support plate 3 is hinged to the flexible screen 2 is a third hinge axis; and the first hinge axis, the second hinge axis, and the third hinge axis are arranged in parallel.

In this embodiment, the first hinge axis, the second hinge axis, and the third hinge axis all extend in a fourth direction, i.e., a D-direction.

Arranging the first hinge axis, the second hinge axis, and the third hinge axis in parallel enables the movement between the linkage 5 and the support plate 3 to be simpler and easier to observe. Such design is conducive to the reduction of complex kinematic and dynamic problems, making movement of the entire structure of the sliding screen assembly 0 smoother and predictable. It ensures that during the movement, the force is transmitted in one direction, which is conducive to the reduction of additional stress caused by torque, thereby improving the structural stability and service life of the sliding screen assembly 0. In addition, the design of the three hinge axes parallel to each other enables a more regular movement trajectory, which is conducive to the reduction of unnecessary friction and abrasion, thereby reducing maintenance costs and increasing the service life of components. It is also conducive to ensuring that the flexible screen 2 remains stable when subjected to external forces (such as bumping or collision), reducing vibration of the flexible screen 2, and maintaining the stability of the flexible screen 2. The design of the three hinge axes parallel to each other also makes the structure visually neater and more organized, which is conducive to the improvement of the overall aesthetics of a product.

In some possible embodiments provided by the present application, referring to FIG. 3 and FIG. 5, the linkage 5 includes a first linkage 51 and a second linkage 52.

As shown in FIG. 3 and FIG. 5, a hinge point at which an end of the first linkage 51 is hinged to the fixed base 4 is a first hinge point 6a, and a hinge point at which the other end of the first linkage 51 is hinged to the support plate 3 is a second hinge point 6b.

As shown in FIG. 5, a hinge point at which an end of the second linkage 52 is hinged to the fixed base 4 is a third hinge point 6c, and a hinge point at which the other end of the second linkage 52 is hinged to the support plate 3 is a fourth hinge point 6d.

Referring to FIG. 5 in conjunction with FIG. 6, in a height direction, i.e., a Z-direction, the first hinge point 6a is lower than the third hinge point 6c, and the second hinge point 6b is lower than the fourth hinge point 6d, so that the first linkage 51 and the second linkage 52 drive the support plate 3 to rotate in the forward direction and the reverse direction, thereby driving the flexible screen 2 to, during unfolding, first move along an arc line trajectory G1 and then move along an approximately straight line trajectory G2, and driving the flexible screen 2 to, during folding, first move along the approximately straight line trajectory G2 and then move along the arc line trajectory G1.

In this embodiment, by providing hinge points at different heights, the first linkage 51 and the second linkage 52 can drive the support plate 3 and the flexible screen 2 to achieve complex movement trajectories. Specifically, referring to FIG. 1 to FIG. 6, when the flexible screen 2 begins to unfold, the first hinge point 6a of the first linkage 51 and the third hinge point 6c of the second linkage 52 begin to rotate in the forward direction, i.e., the A1-direction shown in the figure, to drive the support plate 3 to rotate in the forward direction, thereby driving the winding unit 1 to unwind the flexible screen 2, in which case the flexible screen 2 first moves along the arc line trajectory G1 in a direction away from the winding unit 1, and then moves downward along the approximately straight line trajectory G2, until the flexible screen 2 is fully unfolded. When the flexible screen 2 begins to fold, the first hinge point 6a of the first linkage 51 and the third hinge point 6c of the second linkage 52 begin to rotate in the reverse direction, i.e., the A2-direction shown in the figure, to drive the support plate 3 to rotate in the reverse direction, thereby driving the winding unit 1 to wind the flexible screen 2, in which case the flexible screen 2 first moves upward along the approximately straight line trajectory G2, and then moves along the arc line trajectory G1 in a direction close to the winding unit 1, until the flexible screen 2 is fully folded.

During unfolding and folding, the combination of the arc line trajectory G1 and the approximately straight line trajectory G2 can provide smooth transition for the flexible screen 2, reducing impact and stress on the flexible screen 2, thereby protecting the flexible screen 2 from damage. Such movement trajectory enables the flexible screen 2 to unfold and fold without occupying too much space, for automotive interior trims with limited space, such as the automotive center console. By providing different hinge points in the height direction, the stability of the entire structure can be enhanced, reducing swaying and vibration during movement. Such movement trajectory also enables natural and smooth unfolding and folding of the flexible screen 2, improving operating experience of users.

Referring to FIG. 5, in some embodiments, a hinge point between the support plate 3 and the free end 21 of the flexible screen 2 is a fifth hinge point 6e.

In some possible embodiments provided by the present application, referring to FIG. 5, a distance between the first hinge point 6a and the second hinge point 6b of the first linkage 51 is greater than a distance between the third hinge point 6c and the fourth hinge point 6d of the second linkage 52. The first hinge point 6a is located at the rear of the third hinge point 6c. A front-rear direction is a Q-direction shown in FIG. 5, where the front is a Q1-direction shown in the figure, and the rear is a Q2-direction shown in the figure.

Through the design of the first linkage 51 and the second linkage 52 having different linkage lengths, a distance covered by the first linkage 51 during movement is longer than that of the second linkage 52. A positional relationship between the first hinge point 6a between the first linkage 51 and the fixed base 4 and the third hinge point 6c between the second linkage 52 and the fixed base 4 is designed, to enable the flexible screen 2 to unfold and fold in accordance with a preset trajectory.

In some possible embodiments provided by the present application, referring to FIG. 1, FIG. 3, FIG. 5, and FIG. 7, the first linkage 51 and the second linkage 52 are arc-shaped and protrude in a direction away from the fixed base 4. In this embodiment, the first linkage 51 and the second linkage 52 are designed as being arc-shaped, facilitating avoiding complex components in automotive interior trims (such as the automotive center console), thereby adapting to the complex and limited space.

In some other possible embodiments, the first linkage 51 and the second linkage 52 are of special shapes. The present application does not limit the shapes of the first linkage 51 and the second linkage 52, which can be designed according to actual needs, so as to adapt to the complex and limited space in automotive interior trims (such as the automotive center console).

In some possible embodiments provided by the present application, referring to FIG. 1, FIG. 3, FIG. 5, and FIG. 7, two the first linkages 51 are provided, and the two first linkages 51 are arranged in a first direction. Two second linkages 52 are provided, and the two second linkages 52 are arranged in a second direction. The first direction is parallel to the second direction. Both the first direction and the second direction are parallel to the fourth direction, i.e., the D-direction, shown in the figure. The first linkage 51 is provided at the rear of the second linkage 52, i.e., the Q2-direction shown in the figure.

In this embodiment, the two first linkages 51 are provided between the two second linkages 52.

In some other possible embodiments, the two first linkages 51 and the two second linkages 52 are provided alternately.

In this embodiment, the other end of the linkage 5 is hinged to a lower half of the support plate 3. That is, the other end of the first linkage 51 and the other end of the second linkage 51 are both hinged to the lower half of the support plate 3. With such design, the center of gravity of the entire system of the sliding screen assembly 0 can be lowered, improving the stability. Through the design of the length and angle of the linkage, a force transmission path can be optimized, reducing unnecessary force losses, thereby improving efficiency.

In some possible embodiments provided by the present application, referring to FIG. 7, the support plate 3 includes a guide member 7. Referring to FIG. 1 to FIG. 7, the sliding screen assembly 0 includes a limiting guide rail 8. An extension path of the limiting guide rail 8 is consistent with a movement trajectory of the guide member 7 when the support plate 3 moves. That is, the limiting guide rail 8 follows the movement trajectory of the guide member 7 on the support plate 3. The limiting guide rail 8 is used to prevent the support plate 3 from shaking during movement.

In this embodiment, the guide member 7 and the support plate 3 are formed integrally. The guide member 7 is provided on the top of the support plate 3 and protrudes outward in the fourth direction, i.e., the D-direction shown in the figure. An end of the limiting guide rail 8 is hinged to the fixed base 4. The limiting guide rail 8 is provided on an outer side of the second linkage 52 in the fourth direction, i.e., the D-direction shown in the figure. With such arrangement, the limiting guide rail 8 can limit the swaying and shaking of the support plate 3 during movement in the fourth direction, i.e., the D-direction shown in the figure, improving the stability of the entire structure of the sliding screen assembly 0. Since the limiting guide rail 8 limits the range of movement of the support plate 3, errors caused by shaking or deviation can be reduced, improving the precision of the movement. On the other hand, the extension path of the limiting guide rail 8 is consistent with the movement trajectory of the guide member 7 when the support plate 3 moves. Therefore, the limiting guide rail 8 also defines the movement trajectory of the support plate 3. The limiting guide rail 8 can precisely guide the movement of the support plate 3, ensuring that the support plate moves in accordance with the predetermined trajectory.

In some other possible embodiments, the guide member 7 and the support plate 3 are respectively independent components, and the guide member 7 is fixedly provided on the support plate 3.

In this embodiment, the guide member 7 is cylinder-shaped. The limiting guide rail 8 is provided with a track adapted to the guide member 7. When the support plate 3 moves in the forward direction and the reverse direction, the guide member 7 can slide within the track of the limiting guide rail 8 in the forward direction and the reverse direction.

In some possible embodiments provided by the present application, referring to FIG. 5, the sliding screen assembly 0 includes a driving unit 9. The driving unit 9 is connected to the two first linkages 51 and is used to drive the two first linkages 51 to rotate in the forward direction, i.e., the A1-direction, and in the reverse direction, i.e., the A2-direction.

In some embodiments, the driving unit 9 is a driving motor.

In a second aspect, the present application further provides an automotive seat, including the sliding screen assembly 0 according to any embodiment of the first aspect described above.

In this embodiment, the automotive seat includes a hiding portion for hiding the sliding screen assembly 0 according to any embodiment of the first aspect described above.

Referring to FIG. 5 to FIG. 7, the hiding portion includes an opening 11, an accommodating cavity 10, and a cover plate (not shown in the figure). The sliding screen assembly 0 is accommodated in the accommodating cavity 10. The sliding screen assembly 0 extends from the accommodating cavity 10 through the opening 11 when the flexible screen 2 is unfolded, and the sliding screen assembly 0 is retracted into the accommodating cavity 10 through the opening 11 when the flexible screen 2 is folded. The cover plate is capable of covering and uncovering the opening 11, functioning to make the appearance of the automotive seat neat and aesthetic and achieving a dust-proof effect.

In this embodiment, the hiding portion is provided in the automotive seat, so that the sliding screen assembly 0 is folded and hidden when the sliding screen assembly is not in use, making the automotive seat neat and aesthetic. When the sliding screen assembly is to be used, the sliding screen assembly is unfolded to facilitate use by users. The sliding screen assembly provided by the present application occupies a small space and does not occupy an upper space, and therefore is widely applicable to automotive seats. In addition, using the sliding screen assembly provided by the present application eliminates the need to arrange a visible track on the exterior surface of the automotive seat, making the automotive seat neat and aesthetic. The sliding screen assembly further adds a sporty design to the automotive seat, achieving diversity in automotive seats.

In a third aspect, the present application further provides an automotive sunroof, including the sliding screen assembly 0 according to any embodiment of the first aspect described above.

In this embodiment, the automotive sunroof is provided on an automotive installation frame, and the automotive installation frame is provided with a hiding portion for hiding the sliding screen assembly 0 according to any embodiment of the first aspect described above.

Referring to FIG. 5 to FIG. 7, the hiding portion includes an opening 11, an accommodating cavity 10, and a cover plate (not shown in the figure). The sliding screen assembly 0 is accommodated in the accommodating cavity 10. The sliding screen assembly 0 extends from the accommodating cavity 10 through the opening 11 when the flexible screen 2 is unfolded, and the sliding screen assembly 0 is retracted into the accommodating cavity 10 through the opening 11 when the flexible screen 2 is folded. The cover plate is capable of covering and uncovering the opening 11, functioning to make the appearance of the automotive sunroof neat and aesthetic and achieving a dust-proof effect.

In this embodiment, the hiding portion is provided in the automotive installation frame of the automotive sunroof, so that the sliding screen assembly 0 is folded and hidden when the sliding screen assembly is not in use, making the automotive sunroof neat and aesthetic. When the sliding screen assembly is to be used, the sliding screen assembly is unfolded to facilitate use by users. The sliding screen assembly provided by the present application occupies a small space and does not occupy an upper space, and therefore is widely applicable to automotive sunroofs. In addition, using the sliding screen assembly provided by the present application eliminates the need to arrange a visible track on the exterior surface of the automotive sunroof, making the automotive sunroof neat and aesthetic. The sliding screen assembly further adds a sporty design to the automotive sunroof, achieving diversity in automotive sunroofs.

In a fourth aspect, the present application further provides an automobile, including a hiding portion for hiding the sliding screen assembly 0 according to any embodiment of the first aspect described above.

The hiding portion includes an opening, an accommodating cavity, and a cover plate. The sliding screen assembly 0 is accommodated in the accommodating cavity. The sliding screen assembly 0 extends from the accommodating cavity through the opening when the flexible screen 2 is unfolded, and the sliding screen assembly 0 is retracted into the accommodating cavity through the opening when the flexible screen 2 is folded. The cover plate is capable of covering and uncovering the opening, functioning to make the appearance of the automobile neat and aesthetic and achieving a dust-proof effect.

In this embodiment, the hiding portion is provided in the automobile, so that the sliding screen assembly 0 is folded and hidden when the sliding screen assembly is not in use, making the automobile neat and aesthetic. When the sliding screen assembly is to be used, the sliding screen assembly is unfolded to facilitate use by users. The sliding screen assembly provided by the present application occupies a small space and does not occupy an upper space, and therefore is widely applicable to automobiles. In addition, using the sliding screen assembly provided by the present application eliminates the need to arrange a visible track on the exterior surface of the automobile, making the automobile neat and aesthetic. The sliding screen assembly further adds a sporty design to the automobile, achieving diversity in automobiles.

In this embodiment, the hiding portion may be provided at any position on the automobile, e.g., on an automotive interior trim or the exterior of the automotive body. The automotive interior trim is, for example, at least one of automotive center console, dashboard, and ceiling. The exterior of the automotive body is, for example, a hiding portion on the outer side of an automotive door.

For example, the hiding portion is provided on the dashboard (automotive interior trim). The fixed base 4 in the sliding screen assembly 0 is fixed on the dashboard or a tubular beam. The flexible screen 2 is hidden in the dashboard through the winding unit 1.

Although the present application has been illustrated and described with reference to some preferred implementations of the present application, those of ordinary skill in the art should understand that the above contents are further detailed descriptions of the present application in conjunction with specific implementations, and cannot be construed as limiting the specific implementations of the present application to these descriptions. Those of ordinary skill in the art could make various changes in the form and details, including making several simple deductions or substitutions, without departing from the spirit and scope of the present application.

## Claims

1. A sliding screen assembly, comprising:
a winding unit;
a flexible screen wound on the winding unit, wherein the flexible screen is provided with a free end;
a support plate hinged to the free end, wherein the support plate is used to support the flexible screen unwound by the winding unit;
a fixed base; and
a linkage having an end hinged to the fixed base and the other end hinged to the support plate,
wherein the linkage is rotatable, in a forward direction and a reverse direction,
around a hinge point between the linkage and the fixed base, to drive the support plate to rotate in the forward direction and the reverse direction, thereby driving the winding unit to unwind and wind the flexible screen, enabling the flexible screen to unfold and fold.

2. The sliding screen assembly according to claim 1, wherein a hinge axis at which the end of the linkage is hinged to the fixed base is a first hinge axis; a hinge axis at which the other end of the linkage is hinged to the support plate is a second hinge axis; a hinge axis at which the support plate is hinged to the flexible screen is a third hinge axis; and the first hinge axis, the second hinge axis, and the third hinge axis are arranged in parallel.

3. The sliding screen assembly according to claim 1, wherein the linkage comprises:
a first linkage, wherein a hinge point at which an end of the first linkage is hinged to the fixed base is a first hinge point, and a hinge point at which the other end of the first linkage is hinged to the support plate is a second hinge point; and
a second linkage, wherein a hinge point at which an end of the second linkage is hinged to the fixed base is a third hinge point, and a hinge point at which the other end of the second linkage is hinged to the support plate is a fourth hinge point;
in a height direction, the first hinge point is lower than the third hinge point, and the second hinge point is lower than the fourth hinge point, so that the first linkage and the second linkage drive the support plate to rotate in the forward direction and the reverse direction, thereby driving the flexible screen to, during unfolding, first move along an arc line trajectory and then move along an approximately straight line trajectory, and driving the flexible screen to, during folding, first move along the approximately straight line trajectory and then move along the arc line trajectory.

4. The sliding screen assembly according to claim 3, wherein a distance between the first hinge point and the second hinge point of the first linkage is greater than a distance between the third hinge point and the fourth hinge point of the second linkage;
the first hinge point is located at the rear of the third hinge point.

5. The sliding screen assembly according to claim 4, wherein the first linkage and the second linkage are arc-shaped and protrude in a direction away from the fixed base.

6. The sliding screen assembly according to claim 5, wherein two first linkages are provided, and the two first linkages are arranged in a first direction; two second linkages are provided, and the two second linkages are arranged in a second direction; and the first direction is parallel to the second direction.

7. The sliding screen assembly according to claim 1, wherein the support plate comprises a guide member;
the sliding screen assembly comprises a limiting guide rail, wherein an extension path of the limiting guide rail is consistent with a movement trajectory of the guide member when the support plate moves, and the limiting guide rail is used to prevent the support plate from shaking during movement.

8. An automotive seat, comprising the sliding screen assembly according to any one of claims 1 to 7.

9. An automotive sunroof, comprising the sliding screen assembly according to any one of claims 1 to 7.

10. An automobile, comprising a hiding portion for hiding the sliding screen assembly according to any one of claims 1 to 7,
wherein the hiding portion comprises:
an opening;
an accommodating cavity, wherein the sliding screen assembly is accommodated in the accommodating cavity, the sliding screen assembly extends from the accommodating cavity through the opening when the flexible screen is unfolded, and the sliding screen assembly is retracted into the accommodating cavity through the opening when the flexible screen is folded; and
a cover plate capable of covering and uncovering the opening.
